(19) Europäisches Patentamt
European Patent Office
Office européen des brevets

(11) **EP 4 191 476 A1**

(12) **EUROPEAN PATENT APPLICATION**

(43) Date of publication:
**07.06.2023  Bulletin 2023/23**

(21) Application number: **21211609.9**

(22) Date of filing: **01.12.2021**

(51) International Patent Classification (IPC):
**G06N 3/063** (2023.01)        *G06N 3/04* (2023.01)
**G06N 3/08** (2023.01)

(52) Cooperative Patent Classification (CPC):
**G06N 3/063;** G06N 3/048; G06N 3/08

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **JIVANESCU, Mihaela Andreea**
  **3360 Bierbeek (BE)**
• **MURUGAPPA VELAYUTHAN, Purushotham**
  **2600 Berchem (BE)**

(74) Representative: **Nokia EPO representatives**
**Nokia Technologies Oy**
**Karakaari 7**
**02610 Espoo (FI)**

(54) **MACHINE LEARNING ACCELERATOR**

(57)  This specification relates to systems, apparatus and methods for accelerating machine learning algorithms, matrix multiplications and/or digital signal processing. According to a first aspect of this disclosure, there is described Apparatus comprising means for performing operations comprising: retrieving, from memory, one or more input properties for respective inputs of a plurality of inputs to a compute node; retrieving, from memory, one or more weight properties for respective weights of a plurality of weights associated with the compute node, wherein a respective weight corresponds to one or more of the plurality of inputs to the compute node; for a sequence of pairs of values, each pair comprising an input value and a weight value: determining, based on one or more input properties of the input value, one or more weight properties of the weight value and properties of a current value of an accumulation register associated with the compute node, if a retrieval condition is satisfied: in the event of a positive determination: retrieving the input value and weight value of the pair from their respective memory and/or register; multiplying the retrieved input value and retrieved weight value to obtain a product value; and adding the product value to the accumulation register; in the event of a negative determination: refraining from retrieving the input value and weight value of the pair from their respective memories and/or registers; and determining an activation value of the compute node based on the current value of the accumulation register using an activation function.

FIG. 1

EP 4 191 476 A1

## Description

**Field**

This specification relates to systems, apparatus and methods for accelerating machine learning algorithms, matrix multiplications and/or digital signal processing.

**Background**

Machine learning hardware accelerators are hardware components that execute neural network (NN) models. Depending on the workload, these hardware accelerators can be power hungry. Moreover, most NN models are latency critical too, i.e. they come with strict time limits before which the calculations need to be accomplished.

**Summary**

According to a first aspect of this specification, there is described apparatus comprising means for performing operations comprising: retrieving, from memory, one or more input properties for respective inputs of a plurality of inputs to a compute node; retrieving, from memory, one or more weight properties for respective weights of a plurality of weights associated with the compute node, wherein a respective weight corresponds to one or more of the plurality of inputs to the compute node; and for a sequence of pairs of values, each pair comprising an input value and a weight value: determining, based on one or more input properties of the input value, one or more weight properties of the weight value and properties of a current value of an accumulation register associated with the compute node, if a retrieval condition is satisfied. In the event of a positive determination, the apparatus is configured to perform operations comprising: retrieving the input value and weight value of the pair from their respective memory and/or register; multiplying the retrieved input value and retrieved weight value to obtain a product value; and adding the product value to the value in the accumulation register. In the event of a negative determination, the apparatus is configured to perform operations comprising: refraining from retrieving the input value and weight value of the pair from their respective memories and/or registers. The apparatus is further configured to perform operations comprising determining an activation value of the compute node based on the current value of the accumulation register using an activation function.

The one or more input properties and/or one or more weight properties may be retrieved from an on-chip memory. The input values and/or weight values may be retrieved from one or more further memories.

Determining if the retrieval condition is satisfied may comprise determining if the value of the accumulation register would remain above a lower threshold value if the product values from remaining input value and weight value pairs were added to the accumulation register. Determining if the retrieval condition is satisfied may comprise determining if a current value of the accumulation register would remain below an upper threshold value if product values from remaining input value and weight value pairs were added to the accumulation register. The upper threshold value and/or lower threshold value may be based on a saturation value of the activation function, a representable range of values of the accumulation register and/or a range of valid activation values.

The input properties may comprise signs of respective input values and the weight properties comprise signs of respective weight values. The retrieval condition may be based at least in part on the signs of products of remaining input and weight pairs in the sequence. The pairs may be ordered based at least in part on the sign of the product of the input and the weight for respective pairs.

The input properties may comprise data indicative of sizes of respective input values and the weight properties may comprise data indicative of sizes of respective weight values. The retrieval condition maybe based at least in part on an estimated size of a product of the input value and the weight value for a pair, wherein the estimated size is based on the data indicative of sizes of respective input values and data indicative of the size of the weight values. The input values and weight values may be stored in a plurality of memory banks, wherein a memory bank is associated with input values and/or weight values of a respective size range.

The input properties may comprise a zero flag for one or more input values and the weight properties may comprise a zero flag for one or more weight values. The retrieval condition may comprise determining if the input value and weight value for a pair has no zero flag.

The means may comprise: at least one processor; and at least one memory including computer program code, the at least one memory and computer program code configured to, with the at least one processor, cause the apparatus to perform the configured operations.

According to a further aspect of this specification, there is described a method comprising: retrieving, from memory, one or more input properties for respective inputs of a plurality of inputs to a compute node; retrieving, from memory, one or more weight properties for respective weights of a plurality of weights associated with the compute node, wherein a respective weight corresponds to one or more of the plurality of inputs to the compute node; and for a sequence of pairs of values, each pair comprising an input value and a weight value: determining, based on the one or more input properties, the one or more weight properties and a current value of an accumulation register associated with the compute node, if a retrieval condition is satisfied. In the event of a positive determination, the method comprises: retrieving the input value and weight value of the pair from their respective memory and/or register; multiplying the retrieved input value and retrieved weight value to obtain a product value; and adding the product value to the accumulation register. In the event of a negative determination, the method comprises: refraining from retrieving the input value and weight value of the pair from their respective memory and/or register; and determining an activation value of the compute node based on the current value of the accumulation register using an activation function.

Determining if the retrieval condition is satisfied may comprise determining if the value of the accumulation register would remain above a lower threshold value if the product values from remaining input value and weight value pairs were added to the accumulation register. Determining if the retrieval condition is satisfied may comprise determining if a current value of the accumulation register would remain below an upper threshold value if product values from remaining input value and weight value pairs were added to the accumulation register. The upper threshold value and/or lower threshold value may be based on a saturation value of the activation function, a representable range of values of the accumulation register and/or a range of valid activation values.

The input properties may comprise signs of respective input values and the weight properties comprise signs of respective weight values, and the retrieval condition is based at least in part on the signs of products of remaining input and weight pairs in the sequence.

According to a further aspect of this specification, there is described a computer program comprising computer program instructions that, when executed by processing circuitry, cause: retrieving, from memory, one or more input properties for respective inputs of a plurality of inputs to a compute node; retrieving, from memory, one or more weight properties for respective weights of a plurality of weights associated with the compute node, wherein a respective weight corresponds to one or more of the plurality of inputs to the compute node; and for a sequence of pairs of values, each pair comprising an input value and a weight value: determining, based on the one or more input properties, the one or more weight properties and a current value of an accumulation register associated with the compute node, if a retrieval condition is satisfied. In the event of a positive determination, the instructions cause operations comprising: retrieving the input value and weight value of the pair from their respective memory and/or register; multiplying the retrieved input value and retrieved weight value to obtain a product value; and adding the product value to the accumulation register. In the event of a negative determination the instructions cause operations comprising: refraining from retrieving the input value and weight value of the pair from their respective memory and/or register. The instructions cause further operations comprising: determining an activation value of the compute node based on the current value of the accumulation register using an activation function.

## Brief Description of the Drawings

Example embodiments will now be described by way of non-limiting example, with reference to the accompanying drawings, in which:

FIG. 1 shows a schematic overview of an example method of determining the activation value of a neural network node;
FIG. 2 shows a schematic overview of a method of determining whether a retrieval condition is satisfied;
FIG. 3 shows a schematic overview of a further example method of determining the activation value of a neural network node;
FIG. 4 shows a schematic overview of a system/apparatus for performing any of the methods disclosed herein; and
FIG. 5 shows a schematic example of a system/apparatus for performing any of the methods described herein;
FIG. 6 shows an example of a computer readable medium.

Detailed Description

Latency is a crucial parameter in many computational operations, such as training and inference of artificial intelligence (AI)/machine learning (ML) models, and also more general matrix multiplications and/or digital signal processing. Attempting to keep latency low can translate into large silicon area and power consumption at a hardware level in machine learning accelerators.

This specification describes systems, apparatus and methods for controlling and/or decreasing the number of computations performed when determining an activation value for a compute node, such as a neuron/node of a neural network (NN), of a machine learning accelerator based on the inputs and output of the node. Inputs, weights and/or outputs of a node may be split into "buckets" with the help of maps that encode their properties (e.g. sign maps, bit-width maps, zero maps etc.). A control mechanism is configured to decide which multiply and accumulate (MAC) operations will be performed at the node, and which will be skipped (i.e. not performed for that combination of weights and inputs). The decision is based on a retrieval condition that may, for example, depend on the properties of the inputs, weights, value at the accumulator, specific activation function and/or the available dynamic range. The decision may be based on whether the specific combination of input and weight would significantly influence the output of the neuron or not.

Such systems, apparatus and methods can save on the effective number of MAC operations performed by the hardware, and also on memory access, which is a real bottleneck of ML accelerators. The systems, apparatus and methods described herein may operate in real-time during the execution of the workload and take different decisions from one input to another, if needed.

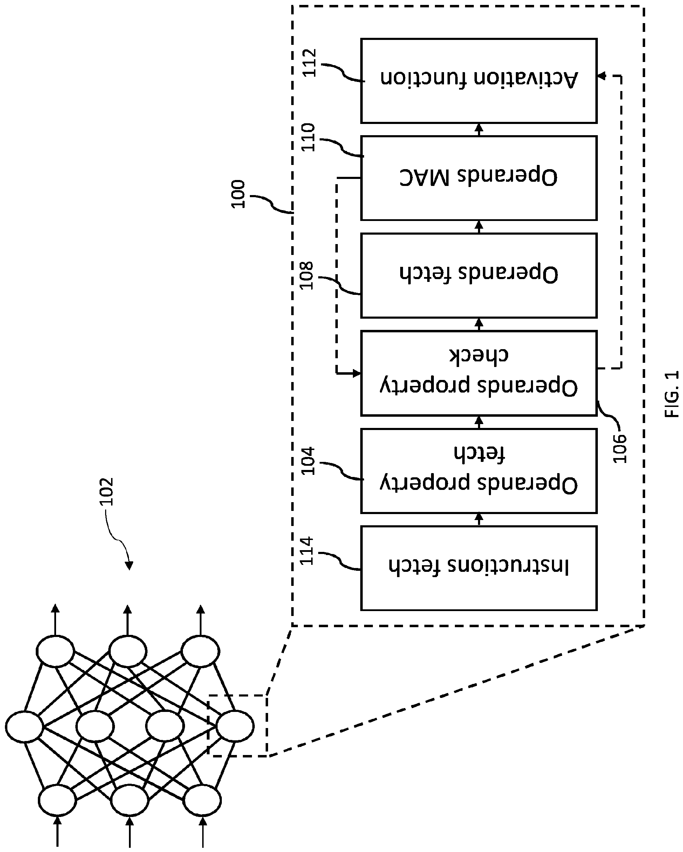

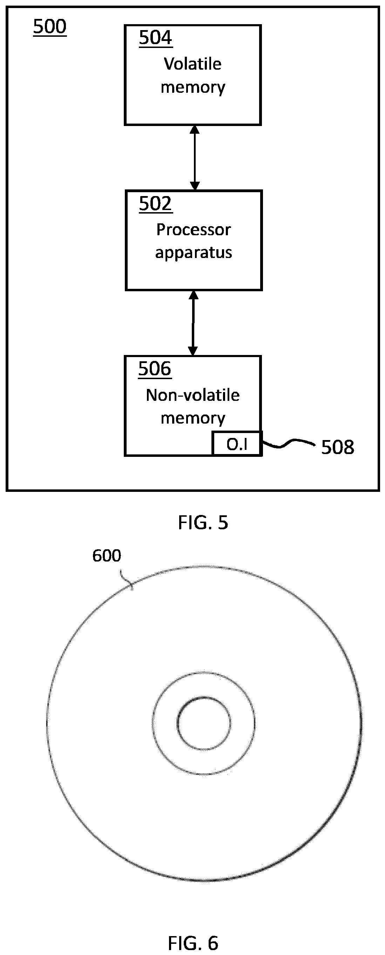

FIG. 1 shows a schematic overview of an example method 100 for determining an activation value of a compute node. The method may be performed by computing apparatus, such as the apparatus described in relation to FIG. 5. In the following, the method will be described in relation to a neural network node of a neural network, though it will be appreciated that the method may also be applied to other types of compute nodes, e.g. in matrix multiplications and/or as part of digital signal processing. The method may be performed as part of a NN training stage or a NN inference stage.

In general, a neural network 102 comprises a plurality of layers of nodes. Nodes determine an activation value based on its inputs, and output the activation value to one or more nodes in the next layer. The first layer (input layer) takes a neural network input (e.g. one or more images, audio samples, signals, natural language samples etc.) as its input, and the final layer (output layer) outputs a neural network output (e.g. a classification of the input, a transformed version of the input, a latent representation of the input etc.). Intermediate layers (hidden layers) of the NN take as input the output from a previous layer of the NN.

The example neural network 102 shown in FIG. 1 is a three layer NN, with an input layer, an output layer and one hidden layer. The neural network 102 in this example is fully connected (i.e. each node takes as input the output of all nodes in the previous layer). However, it will be appreciated that the systems, apparatus and methods described herein are equally applicable to NNs of other types and with different numbers of layers, such as convolutional neural networks (CNNs), residual neural networks (ResNets), recurrent neural networks (RNNs), long short-term memory networks (LSTMs) or the like.

Typically, a node of the NN determines its output activation value, y, by applying an activation function, $f$, to a weighted sum of the node inputs, x. Each input value is associated with a corresponding weight in the weighted sum. These weights, **w,** are learned parameters of the NN, and may be determined during a training phase. The activation value of a node may be given by:

$$y = f\left(\sum_{i=0}^{N-1} x_i \times w_i\right)$$

where $x_i$ are the N input values to the node and $w_i$ are the corresponding weight values for the node. The argument of this function may be referred to herein as the weighted sum. An input value ($x_i$) and its corresponding weight ($wi$) value may be referred to herein as an input value and weight value pair, or an input and weight pair. In some examples, one or more biases, b, may also be added to the weighted sum of inputs. Note that in examples where the compute node is calculating a part of a matrix multiplication, the activation function may return the value of the weighted sum itself.

The activation function, $f$, may be a nonlinear function, such as a ReLU function, a sigmoid function, leaky/parametric ReLU function and/or a tanh function. Many other examples are possible. The value of the activation function may saturate (i.e. become constant in value or change negligibly in value) above an upper threshold value and/or below a lower threshold value. For example, the ReLU activation function has a value of zero for all negative values of its argument.

In some implementations, the activation function may be associated with a dynamic range corresponding to a range of representable values of the argument of the activation function. This representable range may correspond to the range of allowed values of the weighted sum, for example the range of values that may be represented by a variable of a particular type and/or size. Weighted sums of the node inputs that lie outside this range will take one of the values of the boundary of the range. For example, if a weighted sum would be above the upper value of the representable range, the upper value is used as the value for the weighted sum. Similarly, if a weighted sum would be below the lower value of the representable range, the lower value is used as the value for the weighted sum.

A range of valid outputs may also be associated with the activation function. The range of valid outputs may be based on the range of values the activation function may take given the representable range of its argument.

Computing this activation value in full would usually require N multiplications and N additions. At a hardware level, these are usually coupled in sequence as 1 multiplication followed by one addition, commonly referred to as 1 Multiply and ACcumulate unit (or 1 MAC unit). The result of this sequence is stored in an accumulation register of the hardware. The MAC sequence, of length N in this example, is followed by a single activation function ($f$) in order to get the value of the output y for the node. Intermediate values of the weighted sum (the partial sum) are stored in the accumulation register and replaced by an updated value at the next MAC operation.

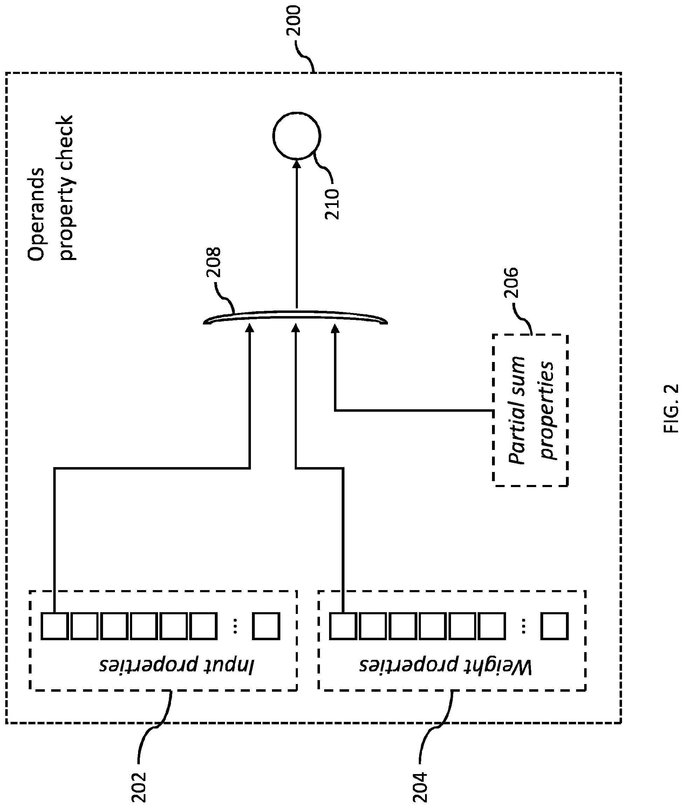

Rather than perform all N MAC operations at every node, the method 100 instead retrieves 104 properties of the input values ("input properties") and properties of the weight values ("weight properties") and checks 106 one or more retrieval conditions for input and weight pairs before performing the MAC operation for that pair. The input/weight properties maybe stored in one or more "maps" (e.g. sign maps, bit-width maps, zero maps etc.) that can be used independently or combined. The one or more retrieval conditions are based properties of the input values, properties of the weight values and/or the current value of the accumulation register (i.e. the result of the weighted sum for a node so far - also referred to herein as a "partial sum"). Examples of retrieval conditions are described in further detail below with respect to FIG. 2.

If the one or more retrieval conditions are satisfied, the input value and weight value pair are retrieved 108 from memory. The input value and weight value are multiplied together and the result (the "product value") is added to the accumulation register (i.e. a MAC operation 110 is performed). The method then proceeds to check 106 the one or more retrieval conditions for the next input value and weight value pair of the node. If the last input value and weight value pair for the node has been reached, the activation value of the node is determined 112 based on the value of the weighted sum in the accumulation register.

If one or more of the retrieval conditions 106 is not satisfied, the input value and weight value pair are not retrieved from memory, and thus not added to the partial sum. In some implementations, the method then proceeds to check the one or more retrieval conditions 106 for the next input value and weight value pair of the node. If the last input value and weight value pair for the node has been reached, the activation value of the node is determined 112 based on the value of the weighted sum in the accumulation register. In some implementations, a failure to satisfy one or more of the retrieval conditions may cause the system to skip the retrieval and MAC operations for remaining input value and weight value pairs, and determine the activation value 112 based on the current value of the partial sum in the accumulation register.

In some implementations, the method 100 further comprises fetching 114 the instructions for performing the other operations of the method from a memory.

A schematic example of a method of checking a retrieval condition is shown in FIG. 2.

An input/weight value for a compute node may be associated with one or more properties. The input value properties 202 and weight value properties 204 encode properties of the input values and weight values respectively in a compact representation, e.g. a representation that is smaller than the input values and weight values themselves. Examples of such properties include, but are not limited to: a zero flag/map (e.g. a bit value for each input/weight indicating whether the input/weight value is a zero), a sign map (e.g. a bit value for each input/weight indicating whether the input/weight value is positive or negative) and/or a data indicative of a size/order of magnitude of the input/weight value (e.g. the bit size of the input/weight value or the most significant bit of the input/weight value, such as bit width).

Properties of the weight values will be fixed after training of the neural network, and can thus be populated once training is finished. However, properties of the input values will in general be different at inference time, depending on the input to the neural network. The properties of the input values of intermediate and final layers become known once they have been calculated by the previous layer of the network. The input value properties for a given input of these layers may therefore be determined once that input has been calculated by the previous layer of the network. Thus, the input values and weight values do not need to be read from memory to populate the maps/properties.

During neural network training, the properties of the input values and weight values are updated at each iteration.

Properties of the current value of a partial sum 206 in an accumulation register associated with the node (also referred to herein as "partial sum properties") may also be retrieved. Examples of such properties include, but are not limited to: the current value of the partial sum; the sign of the partial sum; and/or data indicative of the current size/order of magnitude of the partial sum (e.g. the bit size of the partial sum or the most significant bit of the partial sum).

The input value properties 202, weight value properties 204 and partial sum properties 206 are used to determine whether one or more retrieval conditions 208 are satisfied. If the one or more retrieval conditions are satisfied, a retrieval flag 210 is set to a positive indication. A positive retrieval flag causes the system to retrieve the associated input value and weight value pair and perform a MAC operation with them. If one or more of the retrieval conditions is not satisfied, the retrieval flag 210 is set to a negative indication. A negative retrieval flag causes the system to skip retrieval of the associated input value and weight value pair and therefore not perform a MAC operation with them.

Retrieval of input value properties 202 and weight value properties 204 from a memory is typically faster and more resource efficient than retrieval of the input values and weight values themselves from memory. The cost of accessing the input/weight value properties and determining the retrieval condition is thus offset by the savings in skipping the retrieval of input and weight value pairs from memory that do not satisfy the one or more retrieval conditions. In some embodiments, the input/weight value properties may be stored in an on-chip memory. On-chip memories are typically more energy efficient and/or faster to access than the off-chip (e.g. external) memories in which the input/weight values are typically stored, though their size and cost restrictions typically make them unsuitable for storing many of them/as many as needed the input values and weight values themselves.

In some implementations, one or more of the retrieval conditions may be based on an upper threshold value and/or lower threshold value of the weighted sum. The upper threshold value and/or lower threshold value may be based on one or more saturation values and/or representable ranges of the activation function of the compute node. For example, for a ReLU activation function, the lower threshold may be zero.

In such implementations, if the input properties and weight properties for a pair indicate that adding the product of the pair to the accumulation register will keep the value in the register below the upper threshold and/or above the lower threshold, then the retrieval condition is satisfied. The pair are retrieved from memory and a MAC operation is performed.

If the input properties and weight properties for remaining pairs indicate that adding the products of the pairs to the accumulation register will keep the value in the register above the upper threshold and/or below the lower threshold, then the retrieval condition is not satisfied. The pair are not retrieved from memory, and a MAC operation is not performed. In some implementations, the remaining pairs may also be skipped, since they will not affect the value of the activation function.

The one or more retrieval conditions 208 may comprise a zero-product retrieval condition. The zero-product retrieval condition is based on a zero flag of at least one of the input value and a zero flag of the weight value of a pair. The zero flag may be a single bit indicating whether the associated value is zero or not, e.g. may be one for a non-zero value of an input/weight value and zero for zero value of an input/weight value, or vice versa.

The zero-product retrieval condition is satisfied if the zero flags indicate that the product of the input value and weight value will be non-zero, i.e. if neither of the input value or weight value are indicated to be zero by their respective zero flags. Adding the product value of such pairs to the weighted sum will result in a change in the value in the accumulation register. A zero-product retrieval condition is not satisfied if the zero flags indicate that the product of the input value and weight value will be zero, i.e. if the input value and/or weight value is zero, as indicated by their respective zero flags. The addition of the product value of such pairs to the weighted sum will not result in a change in the value in the accumulation register, and thus the MAC operation associated with them can be skipped without affecting the activation value of the node.

Such a zero product retrieval condition can be implemented as an OR gate on the zero flag when the zero flag is one for a non-zero input/weight value and zero for a zero input/weight value. Alternatively, when the zero flag is zero for a non-zero input/weight value and one for a zero input/weight value, it may be implemented as a NOR gate.

In some embodiments, the order in which the properties of the input value and weight value pairs are processed/considered maybe ordered after retrieval of their respective properties based at least in part by their zero flags. For example, the pairs whose zero-flag indicates a non-zero product for the input value and weight value may be ordered before pairs who have at least one zero flag indicating a zero value. In such embodiments, once the first zero-product retrieval condition is not satisfied, the remaining pairs maybe skipped (i.e. not retrieved from memory and not performing a MAC operation with them) and the activation value of the node determined based on the current value of the accumulation register. Alternatively, the pairs may be ordered based on the zero flags of the weight value, but not the input value, since the weight value will not change at inference time, unlike the input value. Once the first weight value zero flag is reached, the remaining input and weight value pairs are skipped.

The one or more retrieval conditions 208 may alternatively or additionally comprise a sign-based retrieval condition. The sign-based retrieval condition is based on respective signs (i.e. positive or negative) of the input value and weight value of a pair and the current value of the partial sum in the accumulation register. Such signs may be indicated by a "sign flag".

In some embodiments, the sign flag is a single bit indicating whether the sign of the input/weight value is positive or negative. For example, the sign flag may have a value of zero when the associated input/weight value is positive and a value of one when the associated input/weight value is negative, or vice versa.

The sign-based retrieval condition is based on whether the product of the input value and weight value will be positive or negative (i.e. increase or decrease the value of the partial sum), and whether adding this product to the weighted sum will have a significant effect on the activation value of the neural network node based on properties of the current value of the partial sum in the accumulation register. A product of the signs of the input value and weight value may be referred to herein as a "product sign". In some implementations, the product sign may be determined by performing an XOR operation between the input value sign and the weight value sign.

The product sign may be compared to the sign of the current value of the partial sum (i.e. the value in the accumulation register) to determine the effect of adding the product to the partial sum. When the product sign is positive and the partial sum is positive, the MAC operation for the pair will make the partial sum more positive. When the product sign is negative and the partial sum is negative, the MAC operation for the pair will make the partial sum more negative. When the partial sum sign and product sign are opposite, performing the MAC operation will keep the partial sum in the representable range if the product value is in the representable range.

In some implementations, if the current value in the accumulation register is above an upper threshold value, and the product signs of the remaining pairs indicate that they will all be positive, then the retrieval condition will not be satisfied, and the remaining pairs will be skipped. Alternatively or additionally, if the current value in the accumulation register is below a lower threshold value, and the product signs of the remaining pairs indicate that they will all be negative, then the retrieval condition will not be satisfied, and the remaining pairs will be skipped. The upper and/or lower threshold values may be based on saturation values of the activation function and/or a representable range.

In some implementations, the input and weight value pairs may be ordered based on the product of their signs following retrieval of their respective properties. For example, positive product pairs (i.e. input and weight values that are either both positive or both negative) maybe placed first in the ordering, with negative product pairs (i.e. input and weight values have opposite signs) may be placed after the positive product pairs in the ordering. In such embodiments, once the sign-based retrieval condition is not satisfied for a pair, the remaining pairs maybe skipped.

As an example, in some implementations the activation function may be a ReLU activation function that is zero for all negative values of the weighted sum. At iteration i of the node calculation, the value residing in the accumulation register is negative and the sign of all remaining products that still need to be computed and added into the accumulator are also negative. Adding these values will not affect the output of the activation function of the node, as they will only make the weighted sum more negative, and the ReLU activation function saturates below zero. Consequently, a sign-based retrieval condition is not satisfied, and these values are not retrieved.

The one or more retrieval conditions 208 may alternatively or additionally comprise a size-based retrieval condition. The size-based retrieval condition is based on respective sizes (e.g. the bit width, or even (part of) exponent when using a floating point type of representation like IEEE 754 or posits) of the input value and weight value of a pair and the current value of the partial sum in the accumulation register.

For a given input and weight pair, the size of their product may be estimated from the sizes of the input value and weight value. For example, the bit-width of the product may be estimated from the bit width of the input value and weight value. The effect of adding the product to the partial sum may be estimated based on the current size and/or value of the partial sum. If the estimated effect of adding the product to the current value of the partial sum remains within the representable range, then the retrieval condition is satisfied. The input value and weight value of the pairs are retrieved from their respective memories, and a MAC operation is performed using them. If the estimated effect of adding the product to the current value of the partial sum goes or remains outside the representable range, then the retrieval condition is not satisfied. The input value and weight value of the pairs are not retrieved from their respective memories, and no MAC operation is performed using them.

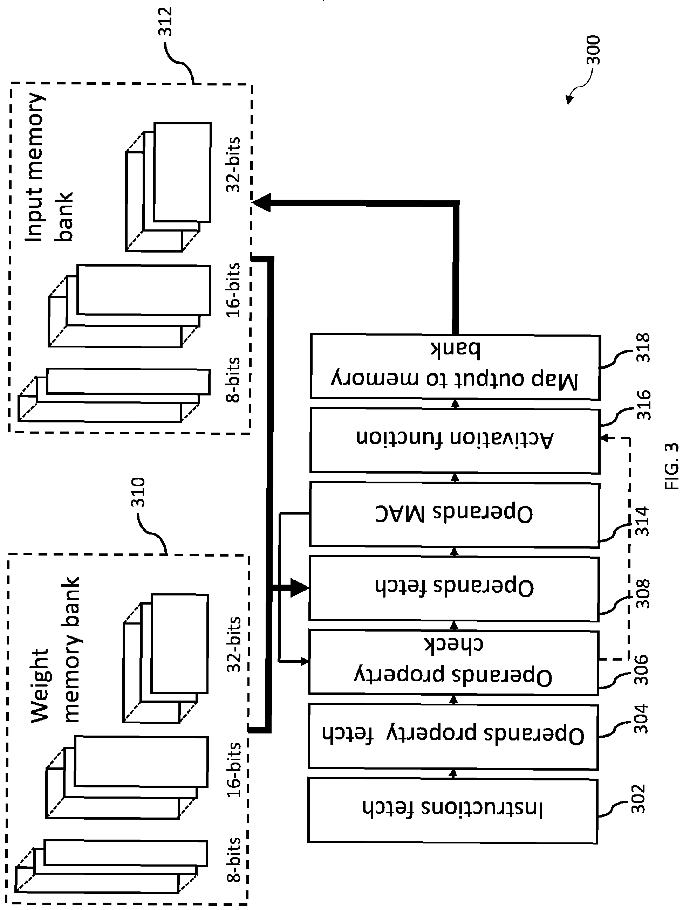

FIG. 3 shows a schematic overview of a further example method 300 of determining the activation value of a neural network node. The method 300 shown in FIG. 3 proceeds similarly to the method 100 described in relation to FIG. 1. Instructions for performing the method 300 may be retrieved 302 from a memory and executed on computing apparatus. The instructions cause the apparatus to fetch 304 properties of input values and weight values from a memory. These are used to check 306 a retrieval condition for input value and weight value pairs that is based on the input and weight value properties and the current value of an accumulation register.

If the retrieval condition is satisfied, the input value and weight value for the pair are retrieved 308 from respective memory banks 310, 312. A MAC operation 314 is performed with the input value and weight value. The method then checks 306 the retrieval condition for the next input and weight value pair in the sequence.

If the retrieval condition is not satisfied, the input value and weight value for the pair are not retrieved, and no MAC operation is performed for the pair. The method then checks 306 the retrieval condition for the next input and weight value pair in the sequence, or, in some embodiments, skips retrieval of the remaining pairs.

When the last input weight value pair is reached (either through checking the retrieval conditions for all pairs, or skipping to the end), the activation function of the node is calculated 316 based on the value of the weighted sum of input values and weight values calculated by the MAC operations. The resulting activation value will be used as an input value for a subsequent layer of the neural network, so may be written 318 to an appropriate input value memory bank 312. The size (e.g. bit length) of the activation value may be determined, and the input value memory bank into which it is written chosen based on this size.

The input values are stored in a plurality of input memory banks 312. Each memory bank is associated with input values of a given size, e.g. is of a certain width and depth, as shown. Input values are sorted and stored in a memory bank of a suitable size. For example, in the example shown, input values requiring less than 8 bits to represent are stored in a memory bank with a width of 8 bits or larger. Input values requiring between 8 bits and 16 bits to represent are stored in a memory bank with a width of 16 bits or larger. Input values requiring between 16 bits and 32 bits to represent are stored in a memory bank with a width of 32 bits or larger, and so on. Other memory bank sizes may alternatively or additionally be used, e.g. sizes greater than 32-bits.

Similarly, the weight values are stored in a plurality of weight memory banks 310. Each memory bank is associated with weight values of a given size, e.g. is of a certain width and depth, as shown. Weight values are sorted and stored in a memory bank of a suitable size. For example, in the example shown, weight values requiring less than 8 bits to represent are stored in a memory bank with a width of 8 bits or larger. Weight values requiring between 8 bits and 16 bits to represent are stored in a memory bank with a width of 16 bits or larger. Weight values requiring between 16 bits and 32 bits to represent are stored in a memory bank with a width of 32 bits or larger, and so on.

During the calculation of the weighted sum, input values and weight values may be fetched 314 from given memory banks in dependence on the value of the partial sum of the weighted sum. While retrieving values from memory banks, the other memory banks may be powered down, resulting in a lower power consumption. For example, while accessing larger values smaller memory banks can be powered down and vice versa. Whether large input values are retrieved or smaller values are retrieved may be based on the current value of the partial sum.

For example, when the result after each MAC is toggling around zero, the smaller memories may be accessed more as they contain small numbers. When the partial sum is close to saturation, values from larger width memories with the opposite sign to the partial sum may be retrieved to bring the partial sum back into the representable range.

In some embodiments, input and weight values may be grouped in the memory banks on a neuron-by-neuron basis. Alternatively, input and weight values for neurons of the same layer may be grouped in the memory banks. An appropriate size memory bank (i.e., width that fits all the value ranges of a layer) to store weights and inputs may be chosen. For example, if the maximum size of the weights and/or inputs for a layer is 8 bits, then an 8-bit memory bank is used to store the inputs and weights for that layer.

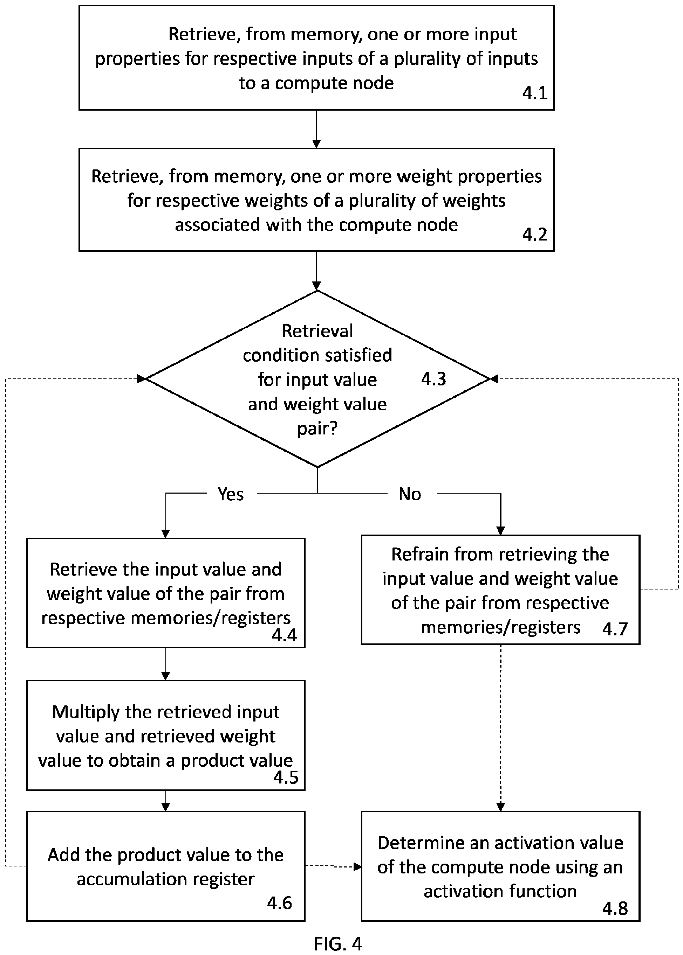

FIG. 4 shows a flow diagram of an example method for determining the activation value of a compute node in a machine-learning accelerator. The compute node may, for example, be associated with a neural network node, a matrix multiplication, and/or digital signal processing. The method may be performed by computing apparatus, such as those described in relation to FIG. 5.

At operation 4.1, the apparatus retrieves one or more input properties of respective inputs of a plurality of inputs to a compute node from a memory. The memory may be an on-chip memory, e.g. a memory located on the tile.

The one or more input properties may be stored in the form of one or more maps, such as a sign map, bit-width map and/or zero map. The maps may be stored separately (e.g. in different memories) or together (e.g. in the same logical/physical memory).

At operation 4.2, the apparatus retrieves one or more weight properties of respective weights of a plurality of weights associated with a compute node from a memory. The memory may be an on-chip memory, e.g. a memory located on the tile, even mixed in between logic. The memory may be the same memory from which the input properties were retrieved, or a different memory.

The one or more weight properties may be stored in the form of one or more maps, such as a sign map, bit-width map and/or zero map. The maps maybe stored separately (e.g. in different memories) or together (e.g. in the same physical/logical memory).

Input and weight values form pairs comprising an input value and its associated weight value in the weighted sum performed by the node. In some implementations, one or more weights may be shared between multiple inputs, i.e. a plurality of pairs comprise the same weight value, but different input values.

In some implementations, the order in which properties of the pairs of input and weight values are checked against the retrieval condition may be ordered based on their respective input properties and/or weight properties before calculation of the weighted sum (i.e. before the MAC operations) begins.

At operation 4.3, the apparatus determines whether an input value and weight value pair satisfy a retrieval condition. The determination is based on one or more input properties of the input value, one or more weight properties of the weight value and a current value of an accumulation register associated with the compute node. In the event of a positive determination, the method proceeds to operation 4.4. In the event of a negative determination, the method proceeds to operation 4.7.

Determining if the retrieval condition is satisfied may comprises determining if the value of the accumulation register would remain above a lower threshold value if the product values from next and/or remaining input value and weight value pair(s) were added to the accumulation register. Alternatively or additionally, it may comprise determining if a current value of the accumulation register would remain below an upper threshold value if product values from next and/or remaining input value and weight value pairs were added to the accumulation register. The upper threshold value and/or lower threshold value may be based on a saturation value of the activation function, i.e. the values above/below which the activation function is constant or only changes value negligibly. Alternatively or additionally, upper and/or lower threshold values may be based on a representable range of activation values.

If the value of the accumulation register would remain above the lower threshold value and/or below the upper threshold value, then the retrieval condition is satisfied. If the value of the accumulation register would remain above the upper threshold value and/or below the lower threshold value, then the retrieval condition is not satisfied.

The one or more retrieval conditions may comprise a retrieval condition based on zero flags (e.g. a zero bit-map) associated with the input and weight values. A zero flag for an input/weight value indicates whether the associated value has a zero value or a non-zero value. If the zero-flags for both the input value and weight value indicate that the associated values are non-zero, then the retrieval condition is satisfied. If the zero flag of either the input value or weight value in a pair indicates that the associated value is zero, the retrieval condition is not satisfied.

In some implementations, the input and weight pairs may be ordered based on their zero flags prior to the retrieval conditions being checked. Pairs with and input and/or weight with a zero flag indicting a zero value may be ordered after pairs with nonzero input and weight values. In such implementations, when the first pair is reached for which a zero flag retrieval condition is not satisfied, the zero flag retrieval condition for the remaining pairs will also not be satisfied, and do not need to be checked. Alternatively, the pairs may be ordered based on the zero flags of the weight value, but not the input value, since the weight value will not change at inference time, unlike the input value. Once the first weight value zero flag is reached, the remaining input and weight value pairs are skipped.

The one or more retrieval conditions may comprise a retrieval condition based on sign flags (e.g. a sign bit-map) associated with the input and weight values. A sign flag for an input/weight value indicates whether the associated value is positive or negative. A product sign for an input and weight pair may be determined based on the sign flag, indicating whether the product of the input and weight will be positive or negative. The retrieval condition may be based on this product value and properties of the current value of the partial sum, such as its sign and/or current value.

In some implementations, the input and weight value pairs may be ordered at least in part based on their product signs. For example, positive products may be ordered before negative products, or vice versa. If the current value of a partial sum is at or above an upper threshold value, and the remaining pairs all have positive product signs, then the retrieval condition for those pairs will not be satisfied. If the current value of a partial sum is at or below a lower threshold value, and the remaining pairs all have negative product signs, then the retrieval condition for those pairs will not be satisfied.

The one or more retrieval conditions may comprise a retrieval condition based on data indicative of sizes (e.g. bit-widths) of the input and weight values. An estimated size of the product of the input value and weight value of a pair may be estimated based on their respective bit-widths. If the estimated size of a pair or the remaining pairs indicates that adding the product(s) to the partial sum keeps the partial sum within the representable range, then the retrieval condition is satisfied. If the estimated size of a pair or the remaining pairs indicates that adding the product(s) to the partial sum takes and/or keeps the partial sum outside the representable range, then the retrieval condition is not satisfied.

At operation 4.4, the apparatus retrieves the input value and weight value of the pair from their respective memories/registers. The input values and/or weight values may be stored in a single memory/register. Alternatively, they may be divided across multiple memories/registers. The input values and/or weight values may be retrieved from a further/external memory, e.g. an off-chip/tile memory. Typically, values that are used often and/or will be used in the immediate future by the system are stored in a register of the system. Registers are memory locations that are directly accessible by processors of the system, and may be accessed quickly, for example immediately or within a low number of clock cycles of the processor, e.g. one clock cycle. Values that are not used often, are not used in the immediate future and/or may no longer be used are typically stored in a memory. Memory is typically slower to access than a register, but has a larger capacity.

In some implementations, the input values and weight values are stored in a plurality of memory banks in dependence on their size (e.g. bit width). While values are being retrieved from an input/weight memory bank, the other input/weight memory banks maybe powered down.

At operation 4.5, the apparatus multiplies the retrieved input value and weight value together to generate a product value.

At operation 4.6, the apparatus adds the product value to the accumulation register. Together operations 4.5 and 4.6 may constitute a MAC operation.

If input value and weight value pairs remain unchecked, the apparatus checks the retrieval condition for the next input value and weight value pair, i.e. returns to operation 4.3.

If no more input value and weight value pairs remain for the compute node, the apparatus proceeds to operation 4.8.

At operation 4.7, the apparatus refrains from retrieving the input value and weight value of the checked pair.

In some embodiments, if input value and weight value pairs remain unchecked, the apparatus checks the retrieval condition for the next input value and weight value pair, i.e. returns to operation 4.3.

In some embodiments, the apparatus proceeds to operation 4.8 the first time a retrieval condition of a particular type is not satisfied, i.e. the remaining input and weight value pairs are not retrieved.

If no more input value and weight value pairs remain for the compute node, the apparatus proceeds to operation 4.8.

At operation 4.8, the apparatus determines an activation value of the compute node based on the current value of the accumulation register using an activation function. The activation function, $f$, may be a non-linear activation function, such as a ReLU function, a sigmoid function, a tanh function or a leaky ReLU function.

The determined activation value may be used as an input value for one or more nodes in a subsequent layer of the neural network. The determined activation value may be written to an input memory bank of a plurality of input memory banks in dependence on the size (e.g. bit widths) of the activation value.

Figure 5 shows a schematic example of a system/apparatus 500 for performing any of the methods described herein. The system/apparatus shown is an example of a computing device. It will be appreciated by the skilled person that other types of computing devices/systems may alternatively be used to implement the methods described herein, such as a distributed computing system. The system/apparatus 500 may form at least a part of a machine learning accelerator. For example, the system/apparatus 500 may be part of a tile that forms a compute unit of a machine learning accelerator, a matrix operation accelerator or a DSP accelerator.

The apparatus (or system) 500 comprises one or more processors 502. The one or more processors control operation of other components of the system/apparatus 500. The one or more processors 502 may, for example, comprise a general-purpose processor. The one or more processors 502 may be a single core device or a multiple core device. The one or more processors 502 may comprise a Central Processing Unit (CPU) or a graphical processing unit (GPU). Alternatively, the one or more processors 502 may comprise specialised processing hardware, for instance a RISC processor or programmable hardware with embedded firmware. Multiple processors may be included.

The system/apparatus comprises a working or volatile memory 504. The one or more processors may access the volatile memory 504 in order to process data and may control the storage of data in memory. The volatile memory 504 may comprise RAM of any type, for example, Static RAM (SRAM) or Dynamic RAM (DRAM), or it may comprise Flash memory, such as an SD-Card.

The system/apparatus comprises a non-volatile memory 506. The non-volatile memory 506 stores a set of operation instructions 508 for controlling the operation of the processors 502 in the form of computer readable instructions. The non-volatile memory 506 may be a memory of any kind such as a Read Only Memory (ROM), a Flash memory or a magnetic drive memory.

The one or more processors 502 are configured to execute operating instructions 508 to cause the system/apparatus to perform any of the methods described herein. The operating instructions 508 may comprise code (i.e. drivers) relating to the hardware components of the system/apparatus 500, as well as code relating to the basic operation of the system/apparatus 500. Generally speaking, the one or more processors 502 execute one or more instructions of the operating instructions 508, which are stored permanently or semi-permanently in the non-volatile memory 506, using the volatile memory 504 to store temporarily data generated during execution of said operating instructions 508.

FIG. 6 shows a non-transitory media 600 according to some embodiments. The non-transitory media 600 is a computer readable storage medium. It may be e.g. a CD, a DVD, a USB stick, a blue ray disk, etc. The non-transitory media 600 stores computer program code causing an apparatus to perform operations described above when executed by a processor such as processor 502 of FIG 5.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

**Claims**

1. Apparatus comprising means for performing operations comprising:

    retrieving, from memory, one or more input properties for respective inputs of a plurality of inputs to a compute node;
    retrieving, from memory, one or more weight properties for respective weights of a plurality of weights associated with the compute node, wherein a respective weight corresponds to one or more of the plurality of inputs to the compute node;
    for a sequence of pairs of values, each pair comprising an input value and a weight value:
    determining, based on one or more input properties of the input value, one or more weight properties of the weight value and properties of a current value of an accumulation register associated with the compute node, if a retrieval condition is satisfied:

        in the event of a positive determination:

            retrieving the input value and weight value of the pair from their respective memory and/or register;
            multiplying the retrieved input value and retrieved weight value to obtain a product value; and
            adding the product value to the accumulation register;

        in the event of a negative determination:
        refraining from retrieving the input value and weight value of the pair from their respective memories and/or registers; and

    determining an activation value of the compute node based on the current value of the accumulation register using an activation function.

2. The apparatus of claim 1, wherein the one or more input properties and/or one or more weight properties are retrieved from an on-chip memory and the input values and/or weight values are retrieved from one or more further memories.

3. The apparatus of any of claims 1 or 2, wherein determining if the retrieval condition is satisfied comprises determining if the value of the accumulation register would remain above a lower threshold value if the product values from remaining input value and weight value pairs were added to the accumulation register and/or determining if a current value of the accumulation register would remain below an upper threshold value if product values from remaining input value and weight value pairs were added to the accumulation register.

4. The apparatus of claim 3, wherein the upper threshold value and/or lower threshold value is based on a saturation value of the activation function, a representable range of values of the accumulation register and/or a range of valid activation values.

5. The apparatus of any preceding claim, wherein the input properties comprise signs of respective input values and the weight properties comprise signs of respective weight values, and the retrieval condition is based at least in part on the signs of products of remaining input and weight pairs in the sequence.

6. The apparatus of claim 5, wherein the pairs are ordered based at least in part on the sign of the product of the input and the weight for respective pairs.

7. The apparatus of any preceding claim, wherein:

    the input properties comprise data indicative of sizes of respective input values and the weight properties comprise data indicative of sizes of respective weight values; and
    the retrieval condition is based at least in part on an estimated size of a product of the input value and the weight value for a pair, wherein the estimated size is based on the data indicative of sizes of respective input values and data indicative of the size of the weight values.

8. The apparatus of claim 7, wherein the input values and weight values are stored in a plurality of memory banks, wherein a memory bank is associated with input values and/or weight values of a respective size range.

9. The apparatus of any preceding claim, wherein the input properties comprise a zero flag for one or more input values and the weight properties comprise a zero flag for one or more weight values, and the retrieval condition comprises determining if the input value and weight value for a pair has no zero flag.

10. The apparatus of any preceding claim, wherein the means comprises:

at least one processor; and
at least one memory including computer program code, the at least one memory and computer program code configured to, with the at least one processor, cause the apparatus to perform the configured operations.

11. A method comprising:

retrieving, from memory, one or more input properties for respective inputs of a plurality of inputs to a compute node;
retrieving, from memory, one or more weight properties for respective weights of a plurality of weights associated with the compute node, wherein a respective weight corresponds to one or more of the plurality of inputs to the compute node;
for a sequence of pairs of values, each pair comprising an input value and a weight value:
determining, based on the one or more input properties, the one or more weight properties and a current value of an accumulation register associated with the compute node, if a retrieval condition is satisfied:

in the event of a positive determination:

retrieving the input value and weight value of the pair from their respective memory and/or register;
multiplying the retrieved input value and retrieved weight value to obtain a product value; and
adding the product value to the value in the accumulation register;

in the event of a negative determination:
refraining from retrieving the input value and weight value of the pair from their respective memory and/or register; and

determining an activation value of the compute node based on the current value of the accumulation register using an activation function.

12. The method of claim 11, wherein determining if the retrieval condition is satisfied comprises determining if the value of the accumulation register would remain above a lower threshold value if the product values from remaining input value and weight value pairs were added to the accumulation register and/or determining if a current value of the accumulation register would remain below an upper threshold value if product values from remaining input value and weight value pairs were added to the accumulation register.

13. The method of claim 12, wherein the upper threshold value and/or lower threshold value is based on a saturation value of the activation function, a representable range of values of the accumulation register and/or a range of valid activation values.

14. The method of any of claims 11 to 13, wherein the input properties comprise signs of respective input values and the weight properties comprise signs of respective weight values, and the retrieval condition is based at least in part on the signs of products of remaining input and weight pairs in the sequence.

15. A computer program comprising computer program instructions that, when executed by processing circuitry, cause:

retrieving, from memory, one or more input properties for respective inputs of a plurality of inputs to a compute node;
retrieving, from memory, one or more weight properties for respective weights of a plurality of weights associated with the compute node, wherein a respective weight corresponds to one or more of the plurality of inputs to the compute node;
for a sequence of pairs of values, each pair comprising an input value and a weight value:
determining, based on the one or more input properties, the one or more weight properties and a current value of an accumulation register associated with the compute node, if a retrieval condition is satisfied:

in the event of a positive determination:

retrieving the input value and weight value of the pair from their respective memory and/or register;
multiplying the retrieved input value and retrieved weight value to obtain a product value; and
adding the product value to the accumulation register;

in the event of a negative determination:
refraining from retrieving the input value and weight value of the pair from their respective memory and/or register; and

determining an activation value of the compute node based on the current value of the accumulation register using an activation function.

FIG. 1

FIG. 2

FIG. 3

Retrieve, from memory, one or more input
properties for respective inputs of a plurality of inputs
to a compute node                    4.1

Retrieve, from memory, one or more weight properties
for respective weights of a plurality of weights
associated with the compute node          4.2

Retrieval
condition satisfied
for input value          4.3
and weight value
pair?

Yes                          No

Retrieve the input value and
weight value of the pair from
respective memories/registers
4.4

Refrain from retrieving the
input value and weight value
of the pair from respective
memories/registers    4.7

Multiply the retrieved input
value and retrieved weight
value to obtain a product value
4.5

Add the product value to the
accumulation register
4.6

Determine an activation value
of the compute node using an
activation function
4.8

FIG. 4

<u>500</u>

<u>504</u>
Volatile
memory

<u>502</u>
Processor
apparatus

<u>506</u>
Non-volatile
memory

O.I ⟩ 508

FIG. 5

600

FIG. 6

Europäisches
Patentamt

European
Patent Office

Office européen
des brevets

# EUROPEAN SEARCH REPORT

Application Number

EP 21 21 1609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU LIU ET AL: "DUET: Boosting Deep Neural Network Efficiency on Dual-Module Architecture", 2020 53RD ANNUAL IEEE/ACM INTERNATIONAL SYMPOSIUM ON MICROARCHITECTURE (MICRO), IEEE, 17 October 2020 (2020-10-17), pages 738-750, XP033856436, DOI: 10.1109/MICRO50266.2020.00066 [retrieved on 2020-11-06] * the whole document * | 1-15 | INV. G06N3/063 ADD. G06N3/04 G06N3/08 |
| A | LIANG YUN ET AL: "OMNI: A Framework for Integrating Hardware and Software Optimizations for Sparse CNNs", IEEE TRANSACTIONS ON COMPUTER-AIDED DESIGN OF INTEGRATED CIRCUITS AND SYSTEMS, IEEE, USA, vol. 40, no. 8, 14 September 2020 (2020-09-14), pages 1648-1661, XP011866767, ISSN: 0278-0070, DOI: 10.1109/TCAD.2020.3023903 [retrieved on 2021-07-15] * abstract * * Sections III, IV, V; figures 2-7 * | 1-15 | |
| A | US 2018/300605 A1 (AMBARDEKAR AMOL ASHOK [US] ET AL) 18 October 2018 (2018-10-18) * abstract * * paragraph [0008] - paragraph [0019] * * paragraph [0031] - paragraph [0079]; figures 1-5 * | 1-15 | TECHNICAL FIELDS SEARCHED (IPC) G06N |

The present search report has been drawn up for all claims

| Place of search | Date of completion of the search | Examiner |
|---|---|---|
| The Hague | 20 May 2022 | Malatesta, Lori |

EPO FORM 1503 03.82 (P04C01)

## ANNEX TO THE EUROPEAN SEARCH REPORT
## ON EUROPEAN PATENT APPLICATION NO.

EP 21 21 1609

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2022

| Patent document cited in search report | Publication date | Patent family member(s) | Publication date |
|---|---|---|---|
| US 2018300605 A1 | 18-10-2018 | AU 2018256212 A1 | 19-09-2019 |
| | | BR 112019021541 A2 | 12-05-2020 |
| | | CA 3056660 A1 | 25-10-2018 |
| | | CL 2019002864 A1 | 06-03-2020 |
| | | CN 110506260 A | 26-11-2019 |
| | | CN 110520846 A | 29-11-2019 |
| | | CN 110520853 A | 29-11-2019 |
| | | CN 110520856 A | 29-11-2019 |
| | | CN 110520857 A | 29-11-2019 |
| | | CN 110520870 A | 29-11-2019 |
| | | CN 110520909 A | 29-11-2019 |
| | | CN 110537194 A | 03-12-2019 |
| | | CN 110546610 A | 06-12-2019 |
| | | CN 110546611 A | 06-12-2019 |
| | | CN 110546628 A | 06-12-2019 |
| | | CN 110546654 A | 06-12-2019 |
| | | CN 110582785 A | 17-12-2019 |
| | | CN 110678843 A | 10-01-2020 |
| | | CO 2019011014 A2 | 21-10-2019 |
| | | EP 3612933 A1 | 26-02-2020 |
| | | EP 3612934 A1 | 26-02-2020 |
| | | EP 3612936 A1 | 26-02-2020 |
| | | EP 3612937 A1 | 26-02-2020 |
| | | EP 3612942 A1 | 26-02-2020 |
| | | EP 3612945 A1 | 26-02-2020 |
| | | EP 3612946 A1 | 26-02-2020 |
| | | EP 3612947 A1 | 26-02-2020 |
| | | EP 3612948 A1 | 26-02-2020 |
| | | EP 3612988 A2 | 26-02-2020 |
| | | EP 3612989 A1 | 26-02-2020 |
| | | EP 3612990 A1 | 26-02-2020 |
| | | EP 3612991 A1 | 26-02-2020 |
| | | EP 3613026 A1 | 26-02-2020 |
| | | IL 269888 A | 01-04-2022 |
| | | JP 7004741 B2 | 21-01-2022 |
| | | JP 2020517014 A | 11-06-2020 |
| | | KR 20190141694 A | 24-12-2019 |
| | | PH 12019550191 A1 | 29-06-2020 |
| | | RU 2019136750 A | 18-05-2021 |
| | | SG 11201909175X A | 28-11-2019 |
| | | US 2018299943 A1 | 18-10-2018 |
| | | US 2018300601 A1 | 18-10-2018 |
| | | US 2018300602 A1 | 18-10-2018 |
| | | US 2018300603 A1 | 18-10-2018 |
| | | US 2018300604 A1 | 18-10-2018 |
| | | US 2018300605 A1 | 18-10-2018 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 21 21 1609

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2022

| Patent document cited in search report | Publication date | Patent family member(s) | | Publication date |
|---|---|---|---|---|
| | | US 2018300606 A1 | | 18-10-2018 |
| | | US 2018300607 A1 | | 18-10-2018 |
| | | US 2018300613 A1 | | 18-10-2018 |
| | | US 2018300614 A1 | | 18-10-2018 |
| | | US 2018300615 A1 | | 18-10-2018 |
| | | US 2018300616 A1 | | 18-10-2018 |
| | | US 2018300617 A1 | | 18-10-2018 |
| | | US 2018300633 A1 | | 18-10-2018 |
| | | US 2018300634 A1 | | 18-10-2018 |
| | | US 2020233820 A1 | | 23-07-2020 |
| | | US 2020356500 A1 | | 12-11-2020 |
| | | US 2021232904 A1 | | 29-07-2021 |
| | | US 2022147833 A1 | | 12-05-2022 |
| | | WO 2018194845 A1 | | 25-10-2018 |
| | | WO 2018194846 A1 | | 25-10-2018 |
| | | WO 2018194847 A1 | | 25-10-2018 |
| | | WO 2018194848 A1 | | 25-10-2018 |
| | | WO 2018194849 A1 | | 25-10-2018 |
| | | WO 2018194850 A1 | | 25-10-2018 |
| | | WO 2018194851 A1 | | 25-10-2018 |
| | | WO 2018194939 A1 | | 25-10-2018 |
| | | WO 2018194940 A1 | | 25-10-2018 |
| | | WO 2018194988 A1 | | 25-10-2018 |
| | | WO 2018194993 A1 | | 25-10-2018 |
| | | WO 2018194994 A2 | | 25-10-2018 |
| | | WO 2018194995 A1 | | 25-10-2018 |
| | | WO 2018194996 A1 | | 25-10-2018 |
| | | WO 2018194998 A1 | | 25-10-2018 |
| | | ZA 201905874 B | | 25-11-2020 |

EPO FORM P0459

For more details about this annex : see Official Journal of the European Patent Office, No. 12/82